# EUROPEAN PATENT APPLICATION

(11) **EP 4 847 273 A1**
(43) Date of publication of application: **02.12.2026**
(21) Application number: 26177109.1
(22) Date of filing: 07.05.2026
(51) Int. Cl.: B60B 31/02, B60B 31/00

(54) **A DEVICE FOR INSERTING A SPOKE INTO ONE HOLE OF A SERIES OF HOLES IN A HUB FLANGE**

(30) Priority: 26.05.2025 NL 2040439
(71) Applicant: Holland Mechanics B.V., 1442 PZ Purmerend (NL)
(72) Inventor: KALB, Wouter, Purmerend (NL)
(74) Representative: van Breda, Jacobus

(57) **Abstract**

A device (1) for inserting a spoke into one hole of a series of holes in a hub flange (6), which device (1) comprises
- a controller (2),
- at least one spoke tube (3) for receiving the spoke, which spoke tube by operation of the controller (2) is movable with reference to the hub flange (6),
wherein the spoke tube (3) is movably positioned on a curve guide (7) so as to define a predefined orientation of the spoke tube (3) with reference to the hub flange (6) depending on the position of the spoke tube (3) on the curve guide (7).

## Description

The invention relates to a device for inserting a spoke into one hole of a series of holes in a hub flange, which device comprises
- a controller, and
- at least one spoke tube for receiving the spoke, which spoke tube, by operation of the controller, is movable with reference to the hub flange.

WO 2007/040386 discloses such a device, which device comprises a spoke ejector, to drive the spoke through the hole in the hub flange when the spoke tube is positioned by the controller near the hub flange. The device of the prior art is provided with means for moving the spoke tube parallel to itself in a transverse plane with reference to the spoke tube, which means also serve for adjusting the angles at which the spoke tube extends with respect to the transverse plane. This means that complicated corrections are required to eventually manipulate the spoke tube in front of the hole through which the spoke is to be driven. Probably for that reason the known device further comprises at least one spoke gripper, which is controlled by the control means in combination with means for rotating the rim, in such a manner that available groups of spokes can be laced therewith. The at least one spoke gripper is axially, radially and/or tangentially movable with respect to the rim. All in all the manipulations required in the known device for proper placing of a spoke into a hole of a hub flange are complicated and require a tedious operation.

It is therefore an object of the invention to make the placement of a spoke into a hole of a hub flange more easy.

A further object of the invention is to enable the placement of such a spoke in hub flanges having a wide variety of dimensions, i.e. in a hub flange with a small supporting axis, but also in a hub flange with a long supporting axis, and further in hubs with a small diameter and in hubs with larger diameters, and even in hubs with two different flange diameters.

In general an object of the invention is to automate the placement of a spoke in a hub flange with a large variety of hub dimensions.

The features of the invention are embodied in one or more of the appended claims.

In a first aspect of the invention the spoke tube is movably positioned on a curve guide so as to define a predefined orientation of the spoke tube with reference to the hub flange depending on the position of the spoke tube on the curve guide. Accordingly this obviates the need of a displacement of the spoke tube parallel to itself in a transverse plane, as well as the need to apply spoke grippers for an accurate placement of the spokes in the holes of the hub flange. The curve guide provides a reliable and repeatable placement and orientation of the spoke tube with reference to the hub.

With the invention it is possible that the placement of the spoke can be reliably carried out, by arranging that the spoke tube has an exit for the spoke, which exit is controllably positionable close and opposite to the hole and at an angle with reference to a virtual centerline through the hole in the hub flange.

Preferably the spoke tube is movable in at least a plane through or parallel to the hole in the hub flange, which plane is shaped as a circle segment having its tip located in or near at the hole of the hub flange, wherein during such movement of the spoke tube in said plane, the exit of the spoke tube is caused to maintain its position close and opposite to said hole, while changing its angle with reference to a virtual centerline through the hole in the hub flange.

The placement of the spoke can effectively be carried out by arranging that the spoke tube is movable to and fro the hole in the hub flange in a longitudinal direction of the spoke tube.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- figure 1 depicts in its center a hub flange surrounded by four curve guides, each curve guide supporting a spoke tube;
- figures 2A and 2B provide a top view and frontal view respectively of a spoke tube with reference to a first hub flange with first dimensions; and
- figures 3A and 3B provide a top view and frontal view respectively of a spoke tube with reference to a second hub flange with second dimensions larger than the first dimensions of the first hub flange.

Whenever in the figures the same reference numerals are applied, these numerals refer to the same or similar parts.

The skilled person is in general knowledgeable with a device for inserting a spoke into a hole of a series of holes in a hub flange, wherein the device comprises
- a controller, and
- at least one spoke tube for receiving the spoke, which spoke tube, by operation of the controller, is movable with reference to the hub flange.

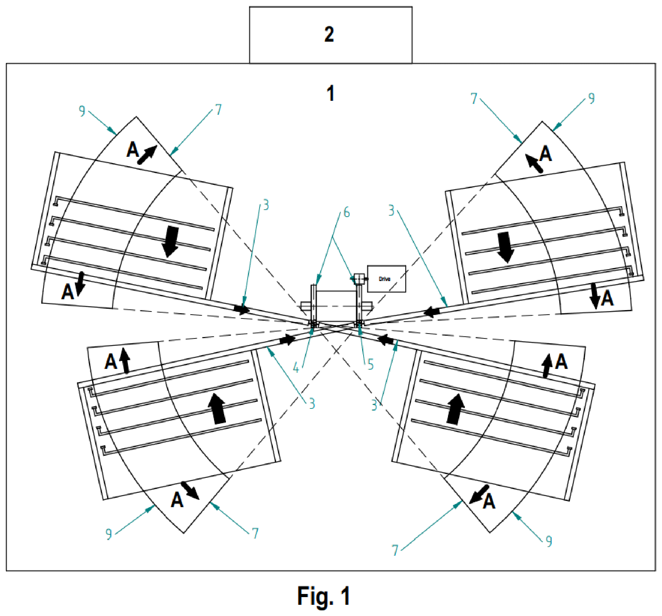

In figure 1 only essential parts of such a device 1 are shown, to note the controller 2, and four different spoke tubes 3, the motions of which are controlled by the controller 2. Each of the spoke tubes 3 is equipped to receive a spoke, which is to be placed through a hole 4 or 5 of a hub 6.

According to the invention each spoke tube 3 is movably positioned on a curve guide 7 so as to define a predefined orientation of the spoke tube 3, and therefore also a predefined orientation of the spoke within the spoke tube 3 with reference to the hub flange 6, depending on the position of the spoke tube 3 on the curve guide 7.

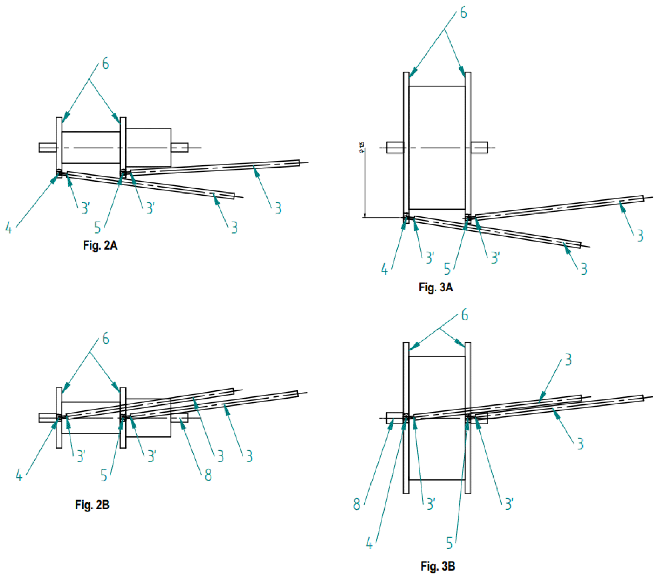

It will be clear from figure 1, but particularly from figures 2A/2B and 3A/3B depicting flanges 6 with different diameters, that the spoke tube 3 has an exit 3' for the spoke, which exit 3' is controllably positionable close and opposite to the hole 4, 5 and at an angle with reference to a virtual centerline 8 through the hole 4, 5 in the hub flange 6.

Further, the arrows A in figure 1 indicate that the spoke tube 3 is movable in at least a plane through or parallel to the hole 4, 5 in the hub flange 6, which plane is shaped as a pizza slice 9 having its virtual tip acting as a rotating point located in or near at the hole 4, 5 of the hub flange 6, wherein during such movement of the spoke tube 3 in said plane, the exit 3' of the spoke tube 3 is caused to maintain its position close and opposite to said hole 4, 5, while changing its angle with reference to a virtual centerline 8 through the hole 4, 5 in the hub flange 6.

The spoke tube 3 is further movable to and fro the hole 4, 5 in the hub flange 6 in a longitudinal direction of the spoke tube 3.

Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claim to this exemplary embodiment. The scope of protection of the invention shall therefore be construed in accordance with the appended claims only, wherein a possible ambiguity in the wording of the claims shall be resolved using this exemplary embodiment.

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## Claims

1. A device (1) for inserting a spoke into one hole of a series of holes in a hub flange (6), which device (1) comprises
- a controller (2),
- at least one spoke tube (3) for receiving the spoke, which spoke tube by operation of the controller (2) is movable with reference to the hub flange (6),
**characterized in that** the spoke tube (3) is movably positioned on a curve guide (7) so as to define a predefined orientation of the spoke tube (3) with reference to the hub flange (6) depending on the position of the spoke tube (3) on the curve guide (7).

2. The device of claim 1, **characterized in that** the spoke tube (3) has an exit (3') for the spoke, which exit (3') is controllably positionable close and opposite to the hole (4, 5) and at an angle with reference to a virtual centerline (8) through the hole (4, 5) in the hub flange (6).

3. The device of claim 2, **characterized in that** the spoke tube (3) is movable in at least a plane through or parallel to the hole (4, 5) in the hub flange (6), which plane is shaped as a circle segment having its tip acting as a rotating point located in or near at the hole (4, 5) of the hub flange (6), wherein during such movement of the spoke tube (3) in said plane, the exit (3') of the spoke tube (3) is caused to maintain its position close and opposite to said hole (4, 5), while changing its angle with reference to the virtual centerline (8) through the hole (4, 5) in the hub flange (6).

4. The device of any one of claims 1 - 3, **characterized in that** the spoke tube (3) is movable to and fro the hole (4, 5) in the hub flange (6) in a longitudinal direction of the spoke tube (3).
